# EUROPEAN PATENT SPECIFICATION

(11) **EP 1 858 802 B1**
(45) Date of publication and mention of the grant of the patent: **22.05.2013**
(21) Application number: 06708733.8
(22) Date of filing: 13.03.2006
(51) Int. Cl.: C01B 3/38

(54) **PROCESS TO PREPARE A MIXTURE OF CARBON MONOXIDE AND HYDROGEN**
VERFAHREN ZUR HERSTELLUNG EINER MISCHUNG VON KOHLENMONOXID UND WASSERSTOFF
PROCÉDÉ DE PRODUCTION D'UN MÉLANGE DE MONOXYDE DE CARBONE ET D'HYDROGÈNE

(30) Priority: 14.03.2005 EP 05101967
(43) Date of publication of application: 28.11.2007
(73) Proprietor: Shell Internationale Research Maatschappij B.V., 2596 HR Den Haag (NL)
(72) Inventor: GROOTVELD, Gerard, NL-1031 CM Amsterdam (NL); JONCKERS, Arjan Allert, NL-1031 CM Amsterdam (NL); TIO, Thian Hoey, NL-1031 CM Amsterdam (NL)
(74) Representative: Matthezing, Robert Maarten
(86) International application number: PCT/EP2006/060642
(87) International publication number: WO 2006/097440

(56) References cited:
- EP-A- 0 522 744
- WO-A-2004/096952
- WO-A-2005/000736
- Surinder Parkash: "Refining processes handbook", 2003, Elsevier, Amsterdam ISBN: 0-7506-7721-X pages 164-170,

## Description

### Field of invention

The invention relates to a process to prepare a mixture of carbon monoxide and hydrogen from a gaseous mixture of hydrocarbons comprising methane, ethane and propane by partial oxidation.

### Background of the invention

WO-A-9603345 describes a process to prepare a mixture of carbon monoxide and hydrogen by partial oxidation of natural gas in a co-annular burner using 99.5% pure oxygen and optionally carbon dioxide as moderator gas and in the absence of a catalyst. The temperature of the natural gas feedstock is between 150 and 250 °C in one example and between 280 and 320 °C in another example. The reactor temperature in the examples is between 1250 and 1400 °C.

A disadvantage of the above process is that the consumption of oxygen is high.

WO-A-2005/00736 discloses a process for the production of synthesis gas in which natural gas is fed to a pre-reformer after which the product, which is at 490°C, is fed to a heat exchanger where the gases are heated to 650°C. The heated gas is fed to an autothermal reformer. The product of this autothermal reformer is used in a Fischer-Tropsch synthesis.

The present process involves an improved process involving non-catalyzed partial oxidation to make hydrogen and carbon monoxide wherein the consumption of oxygen is reduced.

### Summary of the invention

The following process achieves the above-described objective. Process to prepare a mixture of hydrogen and oxygen from a gaseous mixture of hydrocarbons comprising methane, ethane and optional higher carbon number hydrocarbons by performing the following steps:
(a) pre-reforming the hydrocarbon mixture in the presence of a suitable reforming catalyst to convert ethane, and the optional higher carbon number hydrocarbons to methane, carbon dioxide and hydrogen,
(b) heating the gaseous mixture obtained in step (a) to a temperature between 750 and 900 °C,
(c) performing a partial oxidation in the absence of catalyst by contacting the heated mixture of step (b) with a source of oxygen in a reactor burner placed at the top of a vertically oriented reactor vessel yielding a reactor effluent.

### Detailed description of the invention

Applicants found that the volume of oxygen required is reduced when the partial oxidation is performed with a pre-heated feed as claimed. In addition applicants found that in some embodiments the formation of carbon dioxide is reduced. Less formation of carbon dioxide is advantageous because it increases the carbon efficiency of the processes which use the mixture of carbon monoxide and hydrogen as feedstock. The pre-reforming step has been found essential in order to avoid cracking of the ethane and higher carbon number hydrocarbons at these elevated temperatures.

The gaseous mixture of methane, ethane and optionally hydrocarbons having more than 2 carbon atoms can be obtained from various sources such as natural gas, refinery gas, associated gas or coal bed methane and the like. The gaseous mixture suitably comprises mainly, i.e. more than 90 v/v%, especially more than 94%, C₁₋₄ hydrocarbons, especially comprises at least 60 v/v percent methane, preferably at least 75 volume percent, more preferably at least 90 volume percent. Preferably natural gas or associated gas is used.

Preferably any sulphur in the gaseous feedstock is removed prior to performing step (a) to levels of below 10 ppm, preferably below 0.1 ppm. At high-sulphur feed levels the removal of sulphur is suitably performed by contacting the natural gas with a liquid mixture which contains a physical and a chemical absorbent. In such a process the gas mixture is treated at super-atmospheric pressure in two steps consecutively with two different liquid mixtures which contain a physical absorbent and a chemical absorbent. In the first step, H₂S is selectively removed with respect to CO₂, and in the second step, the remaining acid gases are virtually completely removed. An example of a suitable process is the so-called sulfolane extraction process. In addition to such removal or at low-sulphur feed levels small amounts of sulphur may also be removed by passing the gaseous feedstock through a bed of a suitable absorbent, for example zinc oxide, to absorb any hydrogen sulphide present. Often the absorbent is preceded by a hydrogenation reactor to convert organic sulphur compounds to hydrogen sulphide.

Step (a) may be performed by well known pre-reforming processes. Pre-reforming is a well-known technique and has been applied for many years in for example the manufacture of so-called city gas. Suitably the pre-reforming step is performed as a low temperature adiabatic steam reforming process. The gaseous feed to step (a) is preferably mixed with a small amount of steam and preheated to a temperature suitably in the range 350-700 °C, preferably between 350 and 530 °C and passed over a low temperature steam reforming catalyst having preferably a steam reforming activity at temperatures of below 650 °C, more preferably below 550 °C. The pressure at which step (a) is employed is preferably between 20 and 70 bars. Preferably the pressure is about in the same range as the pressure at which step (c) is performed. The steam to carbon (as hydrocarbon and CO) molar ratio is preferably below 1 and more preferably between 0.1 and 1.

Suitable catalysts for the low temperature steam pre-reforming step (a) are catalyst comprising an oxidic support material, suitably alumina, and a metals of the group consisting of Pt, Ni, Ru, Ir, Pd and Co. Examples of suitable catalysts are nickel on alumina catalyst as for example the commercially available pre-reforming catalysts from Johnson Matthey, Haldor Topsoe, BASF and Sued Chemie or the ruthenium on alumina catalyst as the commercially available catalyst from Osaka Gas Engineering.

Step (a) is preferably performed adiabatically. Thus the gaseous feedstock and steam are heated to the desired inlet temperature and passed through a bed of the catalyst. Higher hydrocarbons having 2 or more carbon atoms will react with steam to give carbon oxides and hydrogen: at the same time methanation of the carbon oxides with the hydrogen takes place to form methane. The net result is that the higher hydrocarbons are converted to methane with the formation of some hydrogen and carbon oxides. Some endothermic reforming of methane may also take place, but since the equilibrium at such low temperatures lies well in favour of the formation of methane, the amount of such methane reforming is small so that the product from this stage is a methane-rich gas. The heat required for the reforming of higher hydrocarbons is provided by heat from the exothermic methanation of carbon oxides (formed by the steam reforming of methane and higher hydrocarbons) and/or from the sensible heat of the feedstock and steam fed to the catalyst bed. The exit temperature will therefore be determined by the temperature and composition of the feedstock/steam mixture and may be above or below the inlet temperature. The conditions should be selected such that the exit temperature is lower than the limit set by the de-activation of the catalyst. While some reformer catalysts commonly used are deactivated at temperatures above about 550 °C, other catalysts that may be employed can tolerate temperatures up to about 700 °C. Preferably the outlet temperature is between 350 and 530 °C.

In Step (b) the pre-reformed gaseous mixture obtained in step (a) is increased in temperature to above 650 °C, preferably to above 700 °C and more preferably to between 750 and 900 °C. Preferably heating may be effected by indirect heat exchange with hot gasses in for example a fired heater.

In another preferred embodiment heating is effected by indirect heat exchange between the effluent of step (c) and the pre-reformed gaseous mixture obtained in step (a). This indirect heat exchange may be effected in for example a shell-tube heat exchanger or in a plate-fin heat exchanger. Preferably the effluent of step (c) is first reduced in temperature, if required, to a temperature below 1000 °C, more preferably between 850 and 950 °C, before using said gas in said heat exchanger. If the temperature of the effluent of step (c) is too high for direct use in step (b) the temperature is suitably reduced by quenching, for example with water or with part of the synthesis gas as prepared by the process of the invention, which gas has a lower temperature, preferably below 300 °C. Alternatively the temperature can be reduced by indirect heat exchange against boiling water as for example in a waste heat boiler as for example described in WO-A-2005015105, US-A-4245696 and EP-A-774103. Combinations of the foresaid methods may also be applied to reduce the temperature. A further possible method for reducing the temperature is by cooling only part of the effluent of step (c), in for example the above referred to waste heat boiler, and combining the non-cooled effluent of step (c) and the cooled effluent of step (c) to obtain a gas mixture for use in step (b). By controlling the ratio between the effluent which is cooled and which bypasses the cooling step the temperature of the gas mixture for use in step (b) can be controlled.

The partial oxidation of step (c) may be performed according to well-known principles as for example described for the Shell Gasification Process in the Oil and Gas Journal, September 6, 1971, pp 85-90. Publications describing examples of partial oxidation processes are EP-A-291111, WO-A-9722547, WO-A-9639354 and WO-A-9603345. In step (c) according to the process of the present invention the heated pre-reformed feed as obtained in step (b) is contacted with an oxygen containing gas under partial oxidation conditions. The partial oxidation of step (c) is performed in the absence of a catalyst as is the case in the above referred to Shell Gasification Process. In the context of the present invention a partial oxidation process is performed in the absence of a catalyst, like for example a reforming catalyst. Thus no catalytic conversion takes place for conversion of hydrocarbons to carbon monoxide and hydrogen after the partial oxidation has taken place. Such processes are also referred to as non-catalyzed partial oxidation processes.

The oxygen containing gas may be air (containing about 21 percent of oxygen) and preferably oxygen enriched air, suitably containing up to 100 percent of oxygen, preferably containing at least 60 volume percent oxygen, more preferably at least 80 volume percent, more preferably at least 98 volume percent of oxygen. Oxygen enriched air may be produced via cryogenic techniques, or alternatively by a membrane based process, e.g. the process as described in WO 93/06041.

Contacting the feed with the oxygen containing gas in step (c) is preferably performed in a burner placed at the top of a vertically oriented reactor vessel. The temperature of the oxygen as supplied to the burner is preferably greater than 200 °C. The upper limit of this temperature is preferably 500 °C. The gaseous product of the partial oxidation reaction in step (c) preferably has a temperature of between 1100 and 1500 °C, more preferably between 1200 and 1400 °C and an H₂/CO molar ratio of from 1.5 up to 2.6, preferably from 1.6 up to 2.2.

If the effluent of step (c) is not used in step (b) as a hot gas for heat exchange against the pre-reformed gas as described above the temperature of the effluent of step (c) is preferably reduced in temperature in a so-called waste heat boiler as for example described in WO-A-2005015105, US-A-4245696 and EP-A-774103. In such a waste heat boiler water evaporates and steam and even super heated steam is prepared. Such steam may find attractive used for power generation and the like. Part of said steam may advantageously be combined with the feed of step (a). The mixture of carbon monoxide and hydrogen as cooled in the waste heat boiler will preferably have a temperature of between 400 and 500 °C. Preferably this stream is used to increase the temperature by means of indirect heat exchange of especially the natural gas feed upstream the sulphur removal step to a temperature of between 300 and 450 °C. The mixture of carbon monoxide and hydrogen is preferably cooled to a temperature of below the dewpoint to achieve maximal heat recovery after which the fluid can be fed to a water scrubber in which advantageously soot is removed.

The synthesis gas as obtained by the above process may advantageously be used as feedstock for a Fischer-Tropsch synthesis process, methanol synthesis process, a di-methyl ether synthesis process, an acetic acid synthesis process, ammonia synthesis process or to other processes which use a synthesis gas mixture as feed such as for example processes involving carbonylation and hydroformylation reactions.

In a preferred embodiment the synthesis gas is used in a Fischer-Tropsch synthesis step (d) wherein a hydrogen- and carbon monoxide-containing gas as obtained in step (c) is converted in one or more steps at least partly into liquid hydrocarbons in the presence of a Fischer Tropsch type catalyst which preferably comprises at least one metal (compound) selected from group 8 of the Periodic Table. Preferred catalytic metals are iron and cobalt, especially cobalt. It is preferred to produce a very heavy product in step (d). This results in a relatively low amount of light hydrocarbons, e.g. C₁-C₄ hydrocarbons by-product, resulting in a higher carbon efficiency. Large amounts of heavy products may be produced by catalysts which are known in the literature (e.g. vanadium or manganese promoted cobalt catalysts) under suitable conditions, i.e. relatively low temperatures and relatively low H₂/CO ratios. Any hydrocarbons produced in step (d) boiling above the middle distillate boiling range may be converted into middle distillates by means of hydrocracking. Such a step will also result in the hydrogenation of the product as well as in (partial) isomerization of the product.

The Fischer Tropsch synthesis is, as indicated above, preferably carried out with a catalyst producing large amounts of unbranched paraffinic hydrocarbons boiling above the middle distillate range. Relatively small amounts of oxygen containing compounds are produced. The process is suitably carried out at a temperature of 150 to 300 °C, preferably 190 to 260 °C, and a pressure from 20 to 100 bar, preferably from 30 to 70 bar. In the hydrocracking process preferably at least the fraction boiling above the middle distillate boiling range is hydrocracked into middle distillate. Preferably all C₅⁺, especially all C₁₀⁺ hydrocarbons are hydrocracked in view of the improved pour point of the middle distillates obtained in such a process.

The product stream obtained in step (d) is separated into a relatively light stream and a relatively heavy stream. The relatively light stream (off gas) comprises mainly unconverted synthesis gas, inerts, carbon dioxide and the C₁-C₃ hydrocarbons, preferably the C₁-C₄ hydrocarbons. In a preferred embodiment this stream is recycled to step (a). A small bleed stream is not recycled to step (a) in order to avoid a build-up of inerts in the recirculating gas mixture. An example of an effective bleed stream is by using part of this recycle stream as fuel for the fired heater of step (b) as described above. Preferably the content of this recycle gas in the total feed to step (a) is between 10 and 50 mol%.

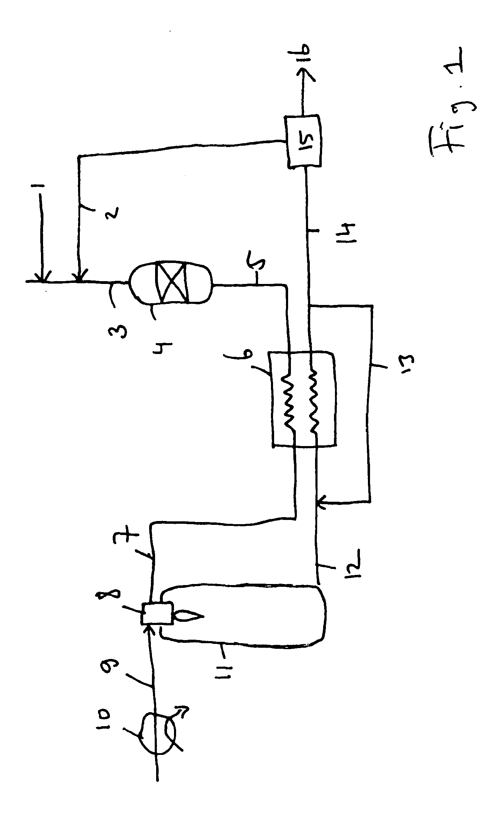

Figure 1 shows an embodiment of the process according to the present invention. Natural gas (1) is mixed with the gaseous by-products stream (2) from a Fischer-Tropsch synthesis step (15) to form feed (3). Feed (3) is fed to a pre-reformer reactor (4) and a pre-reformed effluent (5) is obtained. This effluent (5) is increased in temperature in heat exchanger (6) against the effluent (12) of a partial oxidation reactor (11). Heated pre-reformed mixture (7) together with oxygen (9) is fed to a burner (8) of a partial oxidation reactor (11). Oxygen (9) is preferably heated in heatexchanger (10). The partial oxidation reactor (11). To cool the effluent before use in heat exchanger (6) effluent (12) is cooled by quenching by mixing with part of the cooled product gas (13). Other methods for cooling as described above may also be suitably applied. The resultant mixture of hydrogen and carbon monoxide (14) is used in Fischer-Tropsch synthesis reactor (15). From the paraffinic waxy production (16) a gaseous by-product stream (2) is recovered and recycled to reactor (4).

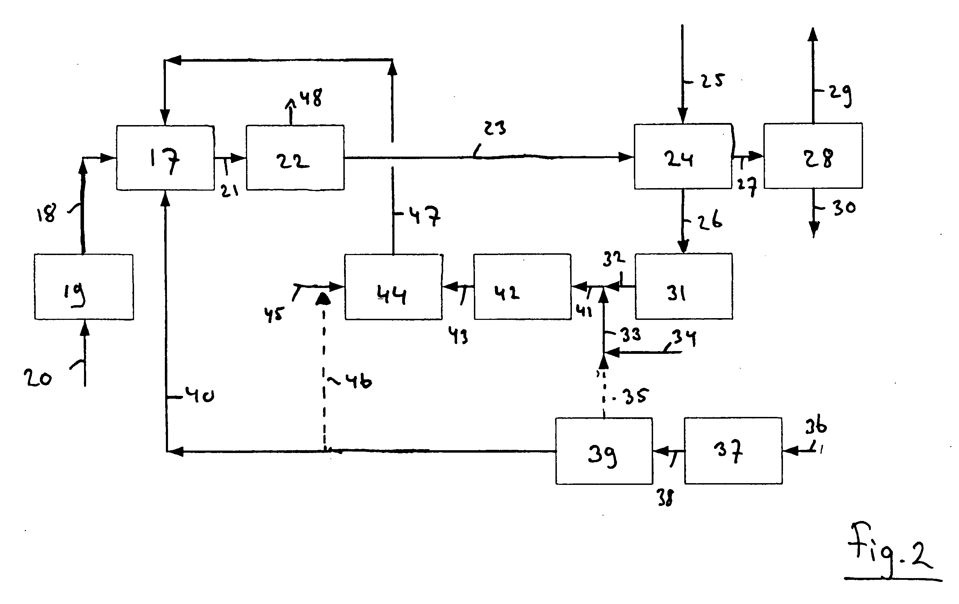

Figure 2 shows another preferred embodiment of the present invention. A partial oxidation reactor (17) is fed with pre-heated oxygen (18) and a pre-reformed mixture (47) to obtain a product gas (21). The pre-heated oxygen (18) is obtained by heating oxygen (20) in a oxygen preheater (19). The product gas (21), comprising hydrogen and carbon monoxide is reduced in temperature in a heat exchanger (22) against water to obtain steam (48), more preferably super heated steam. Heat exchanger (22) is also referred to as a waste heat boiler as for example described in the earlier referred to WO-A-2005015105, US-A-4245696 and EP-A-774103. The conduits for passage of the product gas (21) in heat exchanger (22) are preferably made of a nickel based metal alloy to avoid metal dusting. Example of a suitable metal alloy is Alloy 693 as obtainable from Special Metals Corporation, USA. The partially cooled product gas (23) having a temperature of preferably between 420 and 450 °C is used in heat exchanger (24) to increase the temperature of natural gas (25) to a heated natural gas stream (26) having a temperature of about 380 °C. The product gas (27) having a temperature of below the dewpoint or slightly above is fed to a scrubber (28) to remove any residual soot formed in partial oxidation reactor (17) and recover a cleaned product gas (29) and waste water (30). Sulphur is removed from the pre-heated natural gas (26) in sulphur removal unit (31). The sulphur poor natural gas (32) is mixed with high-pressure steam (34) to obtain a mixture (41), which in turn is used as feed to pre-reformer reactor (42). The effluent (43) of pre-reformer reactor (42) having a temperature of suitably between 370 and 480 °C is increased in temperature in feed pre-heater (44). The pre-reformed and pre-heated mixture (47) has a temperature of suitably between 650 and 800 °C. Pre-heater (44) is suitably a furnace, which is fuelled with a suitable combustion gas and air mixture (45). Suitable combustion gasses are fuel gas, natural gas or the gaseous by-products as obtained from a Fischer-Tropsch synthesis step (36).

Figure 2 also shows a stream (36) of gaseous by-products as obtained from a Fischer-Tropsch synthesis step (not shown in Figure 2). This gaseous by-products stream (36) is increased in pressure in compressor (37) to a pressure level of the partial oxidation reactor (17). The pressurized stream (38) is increased in temperature in pre-heater (39). The pre-heated stream may be directly fed to the burners of the partial oxidation reactor (17) via stream (40), may be used as fuel gas (46) for pre-heater (44) or may be combined with mixture (41) via stream (35) or any combinations thereof.

The invention shall be illustrated with the following non-limiting examples. The examples are calculated mass balances using models describing the reality as best as possible.

### Example 1

To a pre-reformer reactor a gas mixture having a temperature of 350 °C of 100 mol parts of a natural gas and 28 mol parts a Fischer-Tropsch off-gas recycle stream having the compositions listed in Table 1 was fed together with an amount of steam. The effluent having a temperature of 469 °C was increased in temperature to 800 °C before being fed to a burner of a non-catalyzed partial oxidation reactor as described in WO-A-9603345. The effluent was cooled to a temperature of 900 °C and used to provide heat to the feed of the partial oxidation reactor by means of indirect heat exchange. The composition of the product gas is also listed in Table 1.

**Table 1 (Example 1)**

| Stream name | Natural Gas to Pre-reformer | Recycle stream to Pre-reformer | Pre-reformer Exit | Partial oxidation Exit |
|---|---|---|---|---|
| | mol% | mol% | mol% | mol% |
| Component | | | | |
| Hexane | 0.0 | 0.0 | 0.0 | 0.0 |
| Pentane | 0.0 | 0.0 | 0.0 | 0.0 |
| Butane | 0.0 | 1.1 | 0.0 | 0.0 |
| Propane | 0.0 | 1.4 | 0.0 | 0.0 |
| Ethane | 0.5 | 1.1 | 0.0 | 0.0 |
| Methane | 94.4 | 15.4 | 75.8 | 0.7 |
| Hydrogen | 0.5 | 20.4 | 2.0 | 55.6 |
| Carbon Monoxide | 0.0 | 28.3 | 0.2 | 29.5 |
| Carbon Dioxide | 0.0 | 0.0 | 4.5 | 2.2 |
| Nitrogen | 4.6 | 32.3 | 9.8 | 4.1 |
| Argon | 0.0 | 0.0 | 0.0 | 0.0 |
| Oxygen | 0.0 | 0.0 | 0.0 | 0.0 |
| Steam | 0.0 | 0.0 | 7.6 | 8.0 |
| Total | 100.0 | 100.0 | 100.0 | 100.0 |
| Temp. (°C) | 40 | 250 | 469 | 1280 |

### Comparative Example 2

Example 1 was repeated for a case wherein the production of Fischer-Tropsch product as prepared from the synthesis gas product was kept the same as in Example 1. In this case 100 mol parts of natural gas and 26.5 mol parts of a Fischer-Tropsch off-gas recycle stream was fed to the pre-reforming reactor. The feed to the partial oxidation reactor was heated to only 460 °C. The oxygen consumption in the partial oxidation step was 14% more than in Example 1.

**Table 2 (Example 2)**

| Stream name | Natural Gas to Pre-reformer | Recycle stream to Pre-reformer | Pre-reformer Exit | Partial oxidation Exit |
|---|---|---|---|---|
| | mol% | mol% | mol% | mol% |
| Component | | | | |
| Hexane | 0.0 | 0.0 | 0.0 | 0.0 |
| Pentane | 0.0 | 0.0 | 0.0 | 0.0 |
| Butane | 0.0 | 1.1 | 0.0 | 0.0 |
| Propane | 0.0 | 1.5 | 0.0 | 0.0 |
| Ethane | 0.5 | 1.1 | 0.0 | 0.0 |
| Methane | 94.4 | 12.8 | 72.1 | 0.3 |
| Hydrogen | 0.5 | 20.6 | 2.1 | 52.4 |
| Carbon Monoxide | 0.0 | 28.6 | 0.1 | 27.8 |
| Carbon Dioxide | 0.0 | 0.0 | 4.2 | 3.3 |
| Nitrogen | 4.6 | 34.3 | 9.5 | 4.0 |
| Argon | 0.0 | 0.0 | 0.0 | 0.0 |
| Oxygen | 0.0 | 0.0 | 0.0 | 0.0 |
| Steam | 0.0 | 0.0 | 12.0 | 12.1 |
| Total | 100.0 | 100.0 | 100.0 | 100.0 |
| Temp. (°C) | 40 | 250 | 460 | 1280 |

### Comparative Example 3

Example 1 was repeated for a case wherein the production of Fischer-Tropsch product as prepared from the synthesis gas product was kept the same as in Example 1. In this case 100 mol parts of natural gas and 64.2 mol parts of a Fischer-Tropsch off-gas recycle stream was fed to the pre-reforming reactor. In the partial oxidation reactor also a bed of reforming catalyst was present.

**Table 3 (Example 3)**

| Stream name | Natural Gas to Pre-reformer | Recycle stream to Pre-reformer | Pre-reformer Exit | Step (c) Exit (12 in Fig. 1) |
|---|---|---|---|---|
| | mol% | mol% | mol% | mol% |
| Component | | | | |
| Hexane | 0.0 | 0.0 | 0.0 | 0.0 |
| Pentane | 0.0 | 0.0 | 0.0 | 0.0 |
| Butane | 0.0 | 0.7 | 0.0 | 0.0 |
| Propane | 0.0 | 0.9 | 0.0 | 0.0 |
| Ethane | 0.5 | 0.7 | 0.0 | 0.0 |
| Methane | 94.1 | 20.0 | 43.9 | 2.6 |
| Hydrogen | 0.0 | 6.9 | 2.0 | 41.9 |
| Carbon Monoxide | 0.0 | 14.2 | 0.1 | 22.4 |
| Carbon Dioxide | 0.5 | 35.0 | 11.9 | 6.3 |
| Nitrogen | 4.8 | 21.7 | 7.3 | 4.1 |
| Argon | 0.0 | 0.0 | 0.0 | 0.0 |
| Oxygen | 0.0 | 0.0 | 0.0 | 0.0 |
| Steam | 0.0 | 0.0 | 34.9 | 22.7 |
| Total | 100.0 | 100.0 | 100.0 | 100.0 |
| Temp. (°C) | 40 | 250 | 418 | 1050 |

### Comparative Example 4

Example 3 was repeated for a case wherein the production of Fischer-Tropsch product as prepared from the synthesis gas product was kept the same as in Example 1. In this case 100 mol parts of natural gas and 53.6 mol parts of a Fischer-Tropsch off-gas recycle stream was fed to the pre-reforming reactor. The feed to the partial oxidation reactor was heated to only 420 °C. The oxygen consumption in Example 4 was 22% more than in Example 3.

**Table 4 (Example 4)**

| Stream name | Natural Gas to Pre-reformer | Recycle stream to Pre-reformer | Pre-reformer Exit | Step (c) Exit (12 in Fig. 1) |
|---|---|---|---|---|
| | mol% | mol% | mol% | mol% |
| Component | | | | |
| Hexane | 0.0 | 0.0 | 0.0 | 0.0 |
| Pentane | 0.0 | 0.0 | 0.0 | 0.0 |
| Butane | 0.0 | 0.8 | 0.0 | 0.0 |
| Propane | 0.0 | 1.1 | 0.0 | 0.0 |
| Ethane | 0.5 | 0.8 | 0.0 | 0.0 |
| Methane | 94.1 | 16.9 | 47.2 | 1.6 |
| Hydrogen | 0.0 | 9.4 | 2.2 | 42.1 |
| Carbon Monoxide | 0.0 | 16.1 | 0.1 | 22.4 |
| Carbon Dioxide | 0.5 | 28.7 | 9.9 | 6.3 |
| Nitrogen | 4.9 | 26.4 | 8.2 | 4.4 |
| Argon | 0.0 | 0.0 | 0.0 | 0.0 |
| Oxygen | 0.0 | 0.0 | 0.0 | 0.0 |
| Steam | 0.0 | 0.0 | 32.5 | 23.1 |
| Total | 100.0 | 100.0 | 100.0 | 100.0 |
| Temp. (°C) | 40 | 250 | 420 | 1050 |

## Claims

1. Process to prepare a mixture of hydrogen and carbon monoxide from a gaseous mixture of hydrocarbons comprising methane, ethane and optional higher carbon number hydrocarbons by performing the following steps:
(a) pre-reforming the hydrocarbon mixture in the presence of a suitable reforming catalyst to convert ethane, and the optional higher carbon number hydrocarbons to methane, carbon dioxide and hydrogen,
(b) heating the gaseous mixture obtained in step (a) to a temperature between 750 and 900 °C,
(c) performing a partial oxidation in the absence of catalyst by contacting the heated mixture of step (b) with a source of oxygen in a reactor burner placed at the top of a vertically oriented reactor vessel yielding a reactor effluent.

2. Process according to claim 1, wherein the steam to carbon (as hydrocarbon and CO) molar ratio of the feed to step (a) is below 1.

3. Process according to claim 2, wherein the steam to carbon (as hydrocarbon and CO) molar ratio of the feed to step (a) is between 0.1 and 1.

4. Process according to any one of claims 1-3, wherein the temperature of the gaseous mixture obtained in step (a) is between 320 and 700 °C.

5. Process according to any one of claims 1-4, wherein heating in step (b) is effected by indirect heat exchange with hot gasses.

6. Process according to any one of claims 1-5, wherein heating in step (b) is effected by indirect heat exchange between the effluent of step (c) and the pre-reformed gaseous mixture obtained in step (a).

7. Process according to any one of claims 1-6, wherein the temperature of the source of oxygen as supplied to the reactor burner in step (C) is greater than 200 °C.

8. Process according to any one of claims 1-7, wherein step (c) is performed by contacting the heated mixture of step (b) with the oxygen containing gas in a burner placed at the top of a vertically oriented reactor vessel yielding a reactor effluent having a temperature of between 1100 and 1500 °C and a H₂/CO molar ratio of from 1.6 up to 2.2.

9. Process to prepare a Fischer-Tropsch synthesis product wherein the mixture of hydrogen and carbon monoxide as prepared in step (c) of a process according to any one of claims 1-8, is used in a Fischer-Tropsch synthesis step (d) wherein the hydrogen- and carbon monoxide-containing gas as obtained in step (c) is converted in one or more steps at least partly into liquid hydrocarbons in the presence of a Fischer Tropsch type catalyst which comprises at least one metal (compound) selected from group 8 of the Periodic Table.

10. Process according to claim 9, wherein the product stream obtained in step (d) is separated into a relatively light stream and a relatively heavy stream, wherein the relatively light stream comprises mainly unconverted synthesis gas, inerts, carbon dioxide and C₁-C₃ hydrocarbons and wherein part of the light stream is recycled to step (a) and wherein the relatively heavy stream is the Fischer-Tropsch synthesis product.

## Patentansprüche

1. Verfahren zur Herstellung einer Mischung aus Wasserstoff und Kohlenmonoxid aus einer gasförmigen Kohlenwasserstoffmischung, umfassend Methan, Ethan und wahlweise Kohlenwasserstoffe mit höherer Kohlenstoffzahl, mittels Durchführens der folgenden Schritte:
(a) Präreformieren der Kohlenwasserstoffmischung in Gegenwart eines geigneten Reformierungskatalysators, um Ethan und wahlweise Kohlenwasserstoffe mit höherer Kohlenstoffzahl in Methan, Kohlendioxid und Wasserstoff umzuwandeln,
(b) Erhitzen der im Schritt (a) erhaltenen gasförmigen Mischung auf eine Temperatur von 750 bis 900°C,
(c) Durchführen einer Partialoxidation in Abwesenheit von Katalysator durch Inkontaktbringen der erhitzten Mischung von Schritt (b) mit einer Sauerstoffquelle in einem Reaktorbrenner, welcher oben auf einem senkrecht ausgerichteten Reaktorgefäß angeordnet ist, um einen Reaktorabstrom zu liefern.

2. Verfahren nach Anspruch 1, wobei das Molverhältnis von Dampf zu Kohlenstoff (als Kohlenwasserstoff und CO) im Einsatzmaterial für den Schritt (a) unter 1 beträgt.

3. Verfahren nach Anspruch 2, wobei das Molverhältnis von Dampf zu Kohlenstoff (als Kohlenwasserstoff und CO) im Einsatzmaterial für den Schritt (a) zwischen 0,1 bis 1 beträgt.

4. Verfahren nach einem der Ansprüche 1-3, wobei die Temperatur der im Schritt (a) erhaltenen gasförmigen Mischung von 320 bis 700 °C beträgt.

5. Verfahren nach einem der Ansprüche 1-4, wobei das Erhitzen im Schritt (b) durch indirekten Wärmeaustausch mit heißen Gasen bewirkt wird.

6. Verfahren nach einem der Ansprüche 1-5, wobei das Erhitzen im Schritt (b) durch indirekten Wärmeaustausch zwischen dem Abstrom von Schritt (c) und der im Schritt (a) erhaltenen präreformierten gasförmigen Mischung bewirkt wird.

7. Verfahren nach einem der Ansprüche 1-6, wobei die Temperatur der Sauerstoffquelle, wie sie im Reaktorbrenner im Schritt (c) zugeführt wird, mehr als 200 °C beträgt.

8. Verfahren nach einem der Ansprüche 1-7, wobei der Schritt (c) durch Inkontaktbringen der erhitzten Mischung aus Schritt (b) mit dem Sauerstoff enthaltenden Gas in einem Brenner, welcher oben auf einem senkrecht ausgerichteten Reaktorgefäß angeordnet ist, durchgeführt wird, wobei ein Reaktorabstrom mit einer Temperatur von 1100 bis 1500 °C und einem H₂/CO-Molverhältnis von 1,6 bis zu 2,2 erhalten wird.

9. Verfahren zur Herstellung eines Fischer-Tropsch-Syntheseprodukts, wobei die Mischung aus Wasserstoff und Kohlenmonoxid, wie sie im Schritt (c) des Verfahrens nach einem der Ansprüche 1-8 hergestellt wird, in einem Fischer-Tropsch-Syntheseschritt (d) verwendet wird, wobei das Wasserstoff und Kohlenmonoxid enthaltende Gas, wie es im Schritt (c) erhalten wird, in einem oder mehreren Schritten wenigstens teilweise in flüssige Kohlenwasserstoffe in Gegenwart eines Katalysators vom Fischer-Tropsch-Typ umgewandelt wird, welcher wenigstens ein Metall (eine Metallverbindung), ausgewählt von der Gruppe 8 des Periodensystems der Elemente, umfasst.

10. Verfahren nach Anspruch 9, wobei der im Schritt (d) erhaltene Produktstrom in einen verhältnismäßig leichten Strom und in einen verhältnismäßig schweren Strom aufgetrennt wird, wobei der verhältnismäßig leichte Strom überwiegend nicht umgewandeltes Synthesegas, Inertstoffe, Kohlendioxid und C₁-C₃-Kohlenwasserstoffe umfasst, und wobei ein Teil des leichten Stroms in den Schritt (a) rezykliert wird, und wobei der verhältnismäßig schwere Strom das Fischer-Tropsch-Syntheseprodukt ist.

## Revendications

1. Procédé de préparation d'un mélange d'hydrogène et de monoxyde de carbone à partir d'un mélange gazeux d'hydrocarbures comprenant du méthane, de l'éthane et des hydrocarbures optionnels ayant un nombre plus élevé d'atomes de carbone comportant les étapes suivantes consistant à :
(a) pré-reformer le mélange d'hydrocarbures en présence d'un catalyseur de reformage approprié pour convertir l'éthane et les hydrocarbures optionnels à nombre plus élevé d'atomes de carbone en méthane, dioxyde de carbone et hydrogène,
(b) chauffer le mélange gazeux obtenu à l'étape (a) à une température comprise entre 750 et 900°C,
(c) réaliser une oxydation partielle en l'absence de catalyseur en mettant en contact le mélange chauffé de l'étape (b) avec une source d'oxygène dans un brûleur de réacteur placé au sommet d'une cuve de réacteur orienté verticalement fournissant un effluent de réacteur.

2. Procédé selon la revendication 1, dans lequel le rapport molaire vapeur sur carbone (sous forme d'hydrocarbures et de CO) de la charge d'alimentation destinée à l'étape (a) est inférieur à 1.

3. Procédé selon la revendication 2, dans lequel le rapport molaire vapeur sur carbone (sous forme d'hydrocarbures et de CO) de la charge d'alimentation destinée à l'étape (a) est compris entre 0,1 et 1.

4. Procédé selon l'une quelconque des revendications 1 à 3, dans lequel la température du mélange gazeux obtenu à l'étape (a) est comprise entre 320 et 700°C.

5. Procédé selon l'une quelconque des revendications 1 à 4, dans lequel le chauffage à l'étape (b) est mis en oeuvre par échange indirect de chaleur avec des gaz chauds.

6. Procédé selon l'une quelconque des revendications 1 à 5, dans lequel le chauffage à l'étape (b) est mis en oeuvre par échange indirect de chaleur entre l'effluent de l'étape (c) et le mélange gazeux pré-reformé obtenu à l'étape (a).

7. Procédé selon l'une quelconque des revendications 1 à 6, dans lequel la température de la source d'oxygène telle qu'elle est fournie au brûleur de réacteur à l'étape (c) est supérieure à 200°C.

8. Procédé selon l'une quelconque des revendications 1 à 7, dans lequel l'étape (c) est réalisée en mettant en contact le mélange chauffé de l'étape (b) avec le gaz contenant de l'oxygène dans un brûleur placé au sommet d'une cuve de réacteur orientée verticalement fournissant un effluent de réacteur ayant une température comprise entre 1 100 et 1 500°C et un rapport molaire H₂/CO allant de 1,6 à 2,2.

9. Procédé de préparation d'un produit de synthèse de Fischer-Tropsch, dans lequel le mélange d'hydrogène et de monoxyde de carbone tel qu'il est préparé à l'étape (c) d'un procédé selon l'une quelconque des revendications 1 à 8 est utilisé dans une étape (d) de synthèse de Fischer-Tropsch où le gaz contenant de l'hydrogène et du monoxyde de carbone tel qu'il est obtenu à l'étape (c) est converti en une ou plusieurs étapes au moins partiellement en hydrocarbures liquides en présence d'un catalyseur de type Fischer-Tropsch qui comprend au moins un métal (composé) sélectionné parmi le groupe 8 du tableau périodique des éléments.

10. Procédé selon la revendication 9, dans lequel le courant de produit obtenu à l'étape (d) est séparé en un courant relativement léger et un courant relativement lourd, le courant relativement léger comprenant principalement des gaz de synthèse non convertis, des matières inertes, du dioxyde de carbone et des hydrocarbures en C₁ à C₃ et une partie du courant léger étant recyclée vers l'étape (a) et le courant relativement lourd étant le produit de synthèse de Fischer-Tropsch.
